Europäisches Patentamt

European Patent Office

Office européen des brevets

(11) Publication number: **0 252 034**
**A2**

(12) # EUROPEAN PATENT APPLICATION

(21) Application number: **87830255.3**

(22) Date of filing: **02.07.87**

(51) Int. Cl.⁴: **G 02 B 17/06**
**G 02 B 23/10, G 02 B 5/124,**
**G 02 B 23/06**

(30) Priority: **03.07.86 IT 8281386**

(43) Date of publication of application:
**07.01.88 Bulletin 88/01**

(84) Designated Contracting States: **DE FR GB**

(71) Applicant: **Ugo, Licinio**
**Via valdirivo 25**
**I-34132 Trieste TS (IT)**

(72) Inventor: **Ugo, Licinio**
**Via valdirivo 25**
**I-34132 Trieste TS (IT)**

(74) Representative: **Zorzut, Ermenegildo**
**Studio Tecnico S.A.I. per. ind. ZORZUT ERMENEGILDO**
**Via Imbriani 2**
**I-34122 Trieste (IT)**

(54) **Electronic corrector of curvature defects on image, for telescopes provided with large diameter light weight catoptric parts, to be used in orbit as well.**

(57) The following is a description of an electronic method used for correcting telescope images, allowing the use of different catoptric elements, based on inflation and other systems, having big size, being light though not very accurate, which can as well be mounted on telescopes orbiting around the earth.

We therefore suggest the use of not completely accurate reflectors which nonetheless have a wide reflecting surface, suitable for increasing the quantity of received light without affecting image resolution, in addition to the installation of both a laser device and a programmed electronic processor which rectifies image errors caused by curvature defects typical of giant mirrors. Instead of being made of solid material and having a short diameter, the primary mirror can be made of thin sheets of partiallly elastic material, reflecting from one face only, and kept in parabolic or spherical shape by gas pressure or vacuum while being stretched on suitable gasproof containers. Pressure or vacuum values are kept constant, or anyway adequate to the functions and operations performed by the telescope, by a pump driven by sensors connected to an electronic processor programmed in line with the varying conditions of the setting where the telescope is located.

This way, the optical train can be disassembled into smaller parts which can be assembled again, allowing a double use of the telescope, both on earth and in space. The image electronic correcting system to be used on giant reflectors presents an additional advantage because in general, the optical performance of telescopes is improved whenever said system is applied on amateur and on-the market standard telescopes as well.

EP 0 252 034 A2

## Description

"Electronic corrector of curvature defects on image, for telescopes provided with large diamerter light weight catoptric parts, to be used in orbit as well".

From a rapid evaluation of the present situation in the sector of conventional optical instruments (the making of some new of them being still under way), it can be inferred that the construction of telescopes provided with large diameter, spherical or parabolic reflectors still poses a series of technical and economic problems which make size increases impractical owing to enormous production costs. It is well-known also that a long period is needed for manufacturing said mirrors; equally,.the processing of surfaces should be extremely accurate in order to obtain the most precise reflecting surface curvature. As for radio telescopes, bearing in mind that within such electromagnetic wavelenghts reflectors not necessarily need to be extremely precise, the use of light plastic materials has already been envisaged (to be inflated and stiffened once in orbit), also when dealing with diameters larger than 10m, and equally obtaining a sufficient curvature approximation.

The same process may be applied in higher electromagnetic frequencies of the visible spectrum and beyond it as well; in such a case, however, the curvature accuracy of reflecting parts would have to be improved. The construction of telescopes for infrared rays, is under way, as it is the making of other telescopes receiving visible spectrum light, too provided with rigid, extremely delicate conventional reflectors, having a relatively large diameter, which will be orbited around the earth as soon as possible. The diameter of such telescopes will not exceed 1.5 m. A bigger telescope will be completed in the not distant future, to be launched in orbit in 1990; however, due to the longer diameter (2.5 m) it will presumably cost a considerable amount of money. Nowadays, catoptric reflectors are made of smooth, solid materials: even though this method cannot be criticized from a technical point of view, it is no longer suitable for producing telescopes having larger diameters without facing enormous, almost prohibitive cost increases. As regards telescopes to be launched in orbit, their considerable weight, not withstanding the lightened structures, gives rise to a series of problems as it is nearly impossible to have undamaged big diameter telescope reaching their orbit in space. Nowadays, astronomic observations require the use of new optical instruments having bigger reflectors, as the present search for celestial bodies is mostly aimed at discovering objects in the sky at ever increasing distances where one expects to spot new and interesting phenomena. Following the theoretical optic's knowledge, we can assume that a standard telescope shall consist normally of a concave, parabolic or spherical reflector (the latter presenting an aberration to be rectified) having the focus centred along the optical axis at a distance, from the reflector, equal to a few times the lenght of the opening of the primary mirror. However, the most suitable proportions for obtaining a high-quality telescope, are given by rather bulky sizes in relations to the reflector diameter and its curvature radius; such drawbacks are generally overcome by positioning an additional secondary mirror, such as for instance in the "Cassegrain" type or others. As everybody knows, a concave parabolic mirror can be used for focusing beams of light coming from a bi-dimensional space on to another bi-dimensional space, namely on specific points corresponding in the same order to those coming from the emitting area.

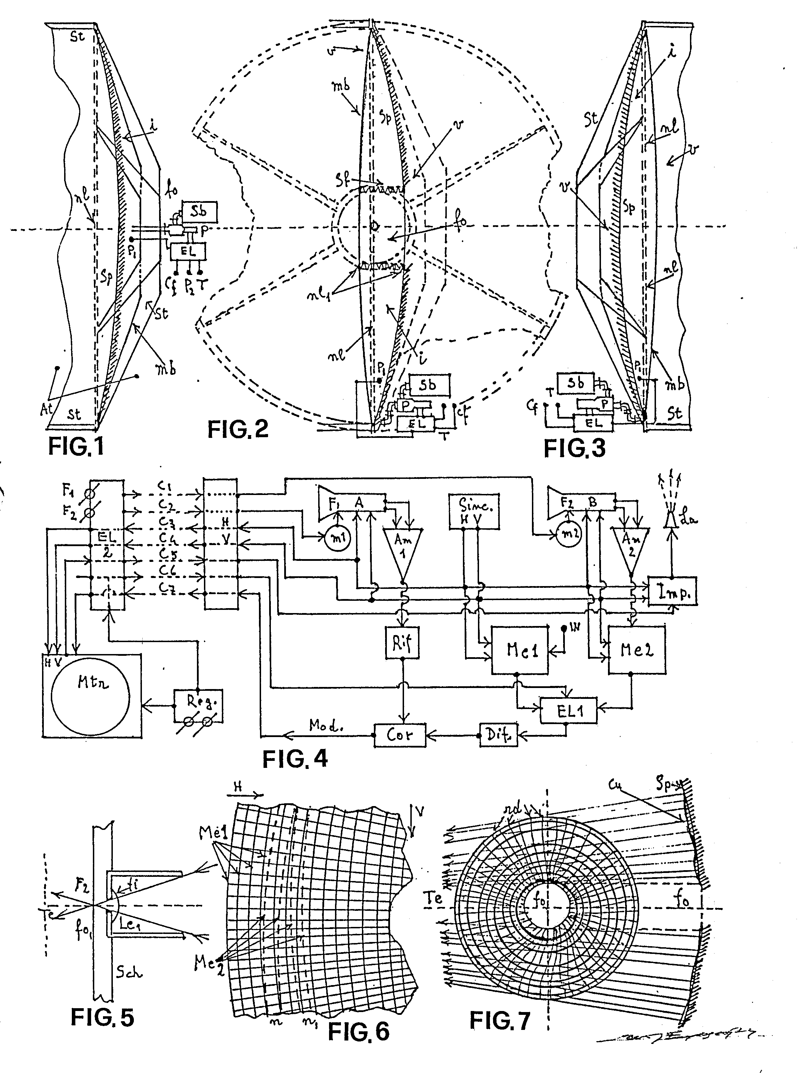

Theoretically, it could be possible to re-focus all the elements of an area-image, including those of a very small point, at enormous distances. The intensity value of the light electromagnetic energy emitted by the light source in relation to the photons detecting instrument (provided the optical elements have no defects) practically sets the limits to the possibility of perceiving the re-focused light, whenever the surface of the primary catoptric reflector curvature in regular. Obviously, if we are to obtain good results, the accuracy of the primary reflector curvature is of fundamental importance, especially when considering that the curvature itself determines the resolution fidelity of minute details. The intensity value of the re-ranged light waves, point by point, depends on the primary mirror receiving surface, namely, on the lenght of its diameter. It would therefore be advisable to resort large catoptric reflectors, having diameters ranging from 10 to 20 m and even more. However, considering size, mirrors made of solid material cannot be used, whereas it is strongly recommended (as it is probably of fundamental importance) to use light inflatable reflectors, where curvature errors, though neglegible, are inevitable. That being stated, in order to exemplify the following specification of the electronic image corrector of the telescope apparatus, we shall first of all examine the catoptric element used for light rays gathering and focusing which are the basic elements of all telescopes being considered. We are dealing with two descriptive version, which will be analyzed separately, as they define two different and fundamental types of telescopes, considered as examples, to be used separately, the former in space and the latter on earth. In general, the construction principle of different telescopes is the same, in spite of fundamental differences on specific details which have to be remarked. The giant spherical or parabolic mirror is obtained from fabric, small sheets or light, thin, slightly elastic adequately manufactured laminated material, reflecting from one side or surface, namely from the face which eventually becomes concave, to provide for the instrument primary catoptric element. In case of an earth or ranged from the earth telescope, it is made up as indicated in fig. 1 where the concave curvature "Sp" can be observed. Such curve is obtained through the action of atmosphere pressure "$P_2$" contrasting the vacuum "$P_1$" which has been artificially created into the gas-tight container on which the elastic material had been stretched. In case of a telescope to be used in space, see fig. 3, the curvature of the reflecting material "Sp" is obtained by means of a totally different process. In fact, considering the vacuum outside the earth atmosphere "v", the system may consist of two thin sheets, the former made of less elastic and transparent material "mb", whereas the latter is made of elastic and reflecting material "Sp", connected to the edges "St", "nl" of the container rigid frame "St" in the inter space "i" where a small quantity of low pressure (if compared to the body of materials selected to obtain the concave reflecting curvature which will make up for the telescope primary mirror) is let in.

It is necessary to point out that the gases selected for the inflation and deflation process shall have specific features, whether the telescope has to be positioned on earth or in space. In the latter case, the sealing properties of the mirror gasproof material, along with the specific conditions of temperature values shall be taken into consideration, therefore, for example, a bigger molecula gas, having adequate temperature melting point is recommended. We shall bear in mind that some of the specific physical conditions essential to have the elastic material shape adequately under the thrust of gas used to inflate it (or vice versa) as to obtain the desired spherical or parabolic shape, consist of thickness regularity, of the same molecular body, of the chemical composition and the way in which it has been prepared, all of which has to be previously planned, in order to obtain the desired curvature at pre-set pressure or vacuum values, as regularly as possible, over the whole surface used as a mirror, considering the different working conditions on earth from those in space. So far, this exemplification concerning principles and contruction of the two above-mentioned reflectors are no news, as its construction methods belong to already acquired technical knowledge. It is nonetheless a necessary premise to the following description which is the subject-matter of this invention.

A pneumatic reversible pump "P" driven by small electric motors is used to obtain either pressure or vacuum in the inter space "i". The pump is to be regularly in service, to increase or decrease the internal pressure value "$P_1$ ", in order to exert a constant stress (or a varying stress corresponding to the pressure needed to keep the reflecting curvature value constant) on elastic materials "Sp", "mb". By letting the gas in and out of the inter space "i" whenever needed, due to the temperature and internal and external pressure variations occurring, by operating an electronic micro-processor or processor, which are in turn controlled by suitable sensors "Cf", "T", "$P_1$ " .... and "$P_2$ " electrically connected to them according to a scheduled programme, our aim can be easily achieved. The reserve gas is contained in a "sb" tank, and considering that the pump is reversible, the gas, which enters and is let out on command, is likely to last for long, provided leakages due to osmosis are confined to the minimum by a careful selection of gasproof materials to be used for the mirror. The micro-processor or processor shall intervene whenever internal and external pressure values tend to diverge from the ideal ratio, essential for keeping the reflector curvature, settled in the way most suitable to the telescope proper performance. Fig. 3 illustrates a sample of a primary reflector to be used in a space orbit. Such arrangement is needed, as we have already stressed in the premise, as pressure conditions in space, between vacuum "v" and the inside area "i", where a certain quantity of gas is found, are reversed if compared to those relating to the mirror to be used on an earth telescope (see fig. 1). However, the material used to make the elastic mirror ("Sp") component, shall have moderate stretching properties in order to take the desired concave shape under the strain of the negative or positive difference between inside and outside, finally taking a spherical or parabolic form according to the telescope type. As already stressed previously, the fabric or material used to make the reflector shall be gasproof in order to avoid corrections as far as possible, which can nonetheless take place due to different and varied causes which cannot always be foreseen. In general, thanks to present knowledge and considering the fruitful research carried out on different materials (not to mention similar mirrors from NASA and ASA) which is likely to lead to the production of material having features suitable for this project and, in case of telescopes primary reflector having a 20 or 30 m diameter, it may take the form of rather regular concave curvature (specularly), having pressure and vacuum values equal to 10-12gr/cm² and even less.

The higher the diameter of such components, the more frequently can slight curvature variations occur: it's only a matter of neglegible technical incidents which cannot be foreseen in advance and generally occur on the surfaces made of big sheets of thin material whose physical features can be expected to be extremely constant (or at least varying according to a regular process) and highly accurate as well. These features can be obtained provided the manufacturing process is as accurate as possible. In fig. 7 the description of the process has been deliberately exaggerated in order to pinpoint the problems which can emerge when the reflecting elastic material of the giant mirror is stretched. Even if the processed reflecting surface and the elastic material thickness perfectly comply with calculations minor differences in internal tension due to even neglegible causes, may slightly alter the regularity of the "Sp" curvature, as indicated in fig. 7. To this end, an optical system of control has been envisaged, assisted by electronic components, set to rectify the distorted image, if any, transmitted by the telescope. Obviously in this case the telescope could be also provided with a big or very big diameter reflector, similar to that described herein.

This electronic corrector, of which we present an example, has been adopted on the reflectors we had described, but it may well be applied or added to existing or future similar optical instruments.

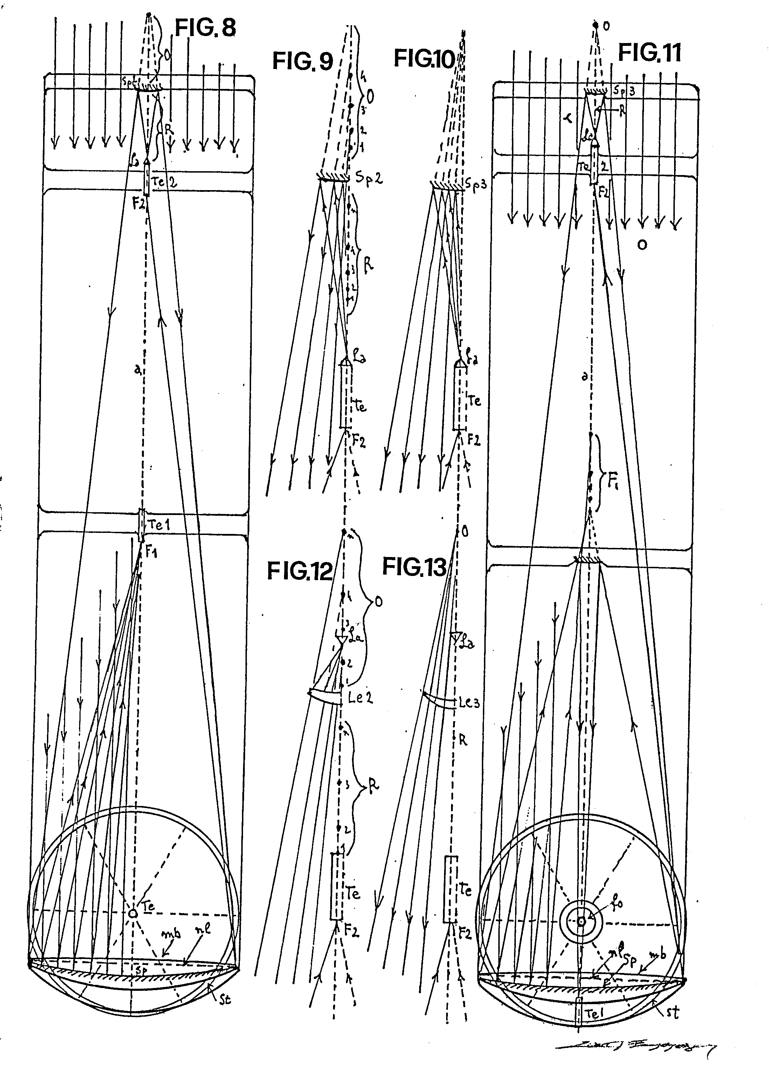

The image rectifier, although being based on the same principle, shall be applied in a different way, whether we are considering catoptric, spherical or parabolic components. In the spherical mirror (fig. 11), there is only one curvature centre "R" whereas the spherical aberration takes place in the focus "$F_1$" produced by rays parallel to the optical axis. In the parabolic mirror (fig. 8) there is only one focus "$F_1$" produced by the rays parallel to the optical axis whereas the various curvature points depend on different radius $R_1$, $R_2$, $R_3$ ..... $R_n$, according to the features of the parabolic section of the selected curvature. The principle including details applied to correct the image reflect by the primary mirror, should it be a spherical mirror, is the following: a cone of laser light is emitted (see fig. 11) from point "o" near to the curvature center "R" of the spherical reflector, in order to strike all points of the mirror surface "Sp", from which, due to reflection, each laser beam springs back to the optical axis in "a" being a focusing point slightly moved from the original starting point, of the laser source on "$F_2$". Here, the beam of returnig rays is passed through a diaphragm "$fo_1$" which is provided with a focusing lens or another optical system serving the same purpose. Subsequently it is passed through a wavelenght filter and a projection of neat figures is obtained on the sensitive surface of a "$Te_2$" telecamera, having adequate curvature surface provided the curvature of the mirror "Sp" is correct; on the con trary, when the curvature is defective, a series of interference images is obtained, all points of which are upside-down conjugation to points and areas from where the rays reflected by the mirror "Sp" have come. In order to obtain a basic neat and more visible image in the projecting the laser cone on to the reflector, a lens is used (e.g. a meniscus-positive lens -fig. 13 - in case of a spherical curvature) to be engraved so as to obtain a sort of reticle made of concentric, radial or ortogonal lines having $\frac{4}{2}$ thickness of the laser ray, or a convex or plain mirror (fig. 10) engraved in the same way to obtain basic geometric patterns crossing as indicated in fig. 6 and 7, producing the same effect as the previous lens. This way, the projecting of clearly visible, light and dark lines is obtained, which form a conventional chosen reference image, the more perfect the better engraving has been, provided the mirror curvature is regular.

The use of an optical filter "Le" (fig. 5) letting only "Sch" screen laser frequency pass through the "$fo_1$" hole, is recommended so as to avoid disturbances on the sample image, coming from other radiations which could be present on the mirror and consequently reflected. The image of laser rays received after reflection by telecamera "$Te_2$" has to be analyzed and decomposed into a code suitable for being recorded by memory "$Me_2$" cf the "$El_1$" processor or computer which, by means of a special programme, uses said data to operate on the image obtained by the telescope telecamera "$Te_1$"; the image is subsequently corrected and reproduced by remote transmitted signals even for example to the earth on a refined definition cathode-rays monitor "Mtr", fig. 4.

Obviously, this rectifying method, which will be subsequently analyzed in details, can be applied on telescopes having a parabolic primary reflector. In this case however, the lens "$Le_2$" (fig. 12) which projects the laser cone on mirror "Sp", shall be parabolic-aspherical lens (fig. 12) and shall be eventually engraved (nearly reticle form) as in the previous esamples. In case of an auxiliary reflecting mirror "$Sp_2$", it shall have a parabolic curvature as illustrated in fig. 9, and shall eventually be engraved to form also a sample geometrical figure. Considering laser projection possible power and because the primary reflector curvature analysis shall not be continuous (it shall be carried out on the basis of recurring from time to time whenever control is needed), suffice it to use a simple diaphragm "$fo_1$" along with a filter lens as indicated in fig. 5 to obtain a bi-dimensional image of rectifying data on telecamera "$Te_2$".

The data will be subsequently used for correcting telescope images. The obtained images form a polar coordinates system "rd" or an ortogonal coordinates system on telecamera "$Te_2$" by means of which precise reference points to be used for corrections are singled out. In the same way, processor $EL_1$ can be fed, by means of adequate scanning, of all data needed for electronic correction and interpolation of image distances to be rectified, therefore removing all image distortions and errors in order to have the real telescope image projected on a suitable cathode-rays monitor "Mtr" or on a video-recorder or, for instance, on a photo plate or film. Telecamera "$Te_1$" and "$Te_2$" positions can be modified and adequately focused on "$F_1$" and "$F_2$" focus; an additional automatic corrections pro gramme, through electric motors "$m_1$" and "$m_2$" is proposed, to be performed by processor "$EL_2$" along with the data received from "$EL_1$", fig. 4. Fig. 4 illustrates the installation of an electronic image correction system according to a blocks-electric scheme. Signals received by "A" "B" telecameras through the same "HV" scanning code are conveniently amplified by "Am1" and "Am2". Telecamera "A" is part of the telescope itself whereas telecamera "B" is part of the laser control system.

Reflector curvature test sample signals, emitted by "B", are stored into "$Me_2$" according to the same scanning code "HV" for an entire cycle of exploration. Each curvature data sample test, is carried out through adequate impulses, to be syncronized at the beginning of the whole scanning cycle "HV", at regular intervals produced by a pulser "Imp" on the laser "La", being automatically timed with code "HV" of the telecameras.

The data referring to an ideal perfect reflector curvature are stored into "$Me_1$" under the same syncronized sequence "HV", through a simulated framing of the same type of coordinates selected for the laser projection and fed even through mathematical algorithms.

The two "$Me_1$" and "$Me_2$" stores fed the data into the "$EL_1$" processor where differences between "$Me_1$" and "$Me_2$" (width and time) are compared and extrapolated according to respective reference points, in order to draw advanced or lagged correcting signals "dif" to be inserted in the "cor" block for each "HV" cycle, where the modulated signals received by telecamera "A" get after a "Rif" time re-phasing on operational lag of other blocks, fig. 4. Then the "Cor" video-signals can be remotely transmitted, by using standard cable or via ether multichannel systems to an "$EL_2$" multichannel unit, along with the "HV" scanning code, to be conveyed to a "Mtr" monitor which can lodge a series of commands to plot programmes for magnifying and extracting image parts by using the "Reg" additional processor whenever needed. Fig. 6 illustrates hov the detected curve "$Me_2$" is rectified by means of different signals obtained from the comparison between the two stored curves, the former being the telescopic mirror curve and the latter being the ideal curve representing a mirror being regular: the first case illustrates a lag between the position of the two curves "n", while the second one shows an advance on "$n_1$". The rectifying process is made point by point, line by line, in compliance with the syncronism basic code "HV".

The scanning code shall be suitable for defining the same images on the basis of how small the details to be observed are. Once the basic standard image variations are stored into the programmed computer each error can be totally removed.

A laser system for electronically rectifying images of a giant telescope, aided by a programmed electronic processor can as well be used (following a similar process) for removing errors in other catoptric and catadioptric (optical) instruments, provided errors are detected and inserted in the computer or processor programme reference store. Under circumstances in which it is advisable to adopt the "CASSEGRAIN" type mounting or similar, to make a telescope having an inflatable primary reflector like that described, it is necessary to envisage a hole around the optical axis in the center of the primary reflector itself and therefore it is necessary to adopt the method illustrated in fig. 2 where the rigid rings "$nl_1$" and the elastic bellow "Sf" are visible, which can ensure the inflation of the elastic mirror as requested in order to easily obtain the desired curvature. As regards the erection of a complete telescope, all the supporting frames, rings and antireverberation parts can be installed according to traditional method and, only in the case of a big space instruments (to be mounted piece by piece), shall the parts consist of more solid and lighter materials. A space telescope having a 400 $m^2$ reflecting area, provided with standard accessories and inflatable primary reflector shall weigh much less than the shorter diameter conventional telescopes nowadays in use and construction. A big diameter inflatable reflector can be added as pre-primary component to any conventional telescope already in use. Such reflector a giant 20 m reflector to be mounted on a 40 cm diameter telescope along having e.g. a parabolic curvature, (which presents specific advantages), can increase the light quantity received by 2000 times and so considerably reduce losses of light at the center. A big diameter light weight reflector, provided with the complete system for electronic corrections (image, focus, etc.) envisaged by this discovery can be inserted also in amateur astronomers' telescopes, through a cathode-rays supplementary monitor. Obviously an automatic permanent focus setting programme relating to the giant primary or pre-primary added mirror can be added to the image correcting data processing. In this case, a computer provided with a relevant separate programme can be used for the same purposes. Should this be the case, when giant reflectors are added, it is necessary to provide to design adjustements and modifications in order to achieve the balancing of the final focus again, both on optical components posi tioning distances and on the possible curvatures of secondary mirrors, removing at least the smaller basic telescope antireverberation cylinder, in case it be a reflection-one. Should it be a lens telescope, the eyepiece position shall be modified in order to widen the visual field and to make it as wider as it is requested by the added reflector. It shall not be forgotten that the insertion of a laser image correcting device increases the total lenght of the original instrument, no longer allowing it to be used for direct observation. It is however necessary to draw all advantages possible from this application, in the simplest way, respecting optics laws which are well known by all experts. The description refers to essential elements of the device and is to be considered only as a preferred example, while design modifications may be carried on when required during the planning process, without modifying the principles adopted to achieve the described results of this invention.

## Claims

1) Discovery entitled "Electronic corrector of curvature defects on image, for telescopes provided with large diameter light weight catoptric parts, to be used in orbit as well".

2) Electronic corrector etc. as indicated in claim N. 1, having special features according to which, to keep curvature of the inflatable primary reflectors described, temperature and pressure sensors are used, to be connected to programmed electronic micro-processor or computer, which, by means of servomechanisms, drives a reversible pneumatic pump so as to keep internal reflector pressure and vacuum most suitable and constant, related to environment relevant parametra and to maintain correct focussing.

3) Electronic corrector, as indicated in claim N. 1, having special features according to which, apart from the type of telescope used, the curvature regularity of the light primary reflector, accomplished in compliance with the rules set in claim N. 2, is explored through a laser cone beam projection which is directed on the reflecting primary mirror and which is detected, after reflection, by suitable opto-electronic instruments, like telecameras or surface photo-detectors, etc.

4) Electronic corrector, as indicated in claim N. 1, having special features according to which, in case of spherical curvature primary reflectors, in order to project an analyzing laser cone beam, an optical system is used, to be positioned near the reflector curvature center, directed so as to strike the entire mirror reflecting surface, so as the light emitted from a point along the optical axis, slightly lateral to the said center, is returning focalized on the opposite side of it, at brief distance.

5) Electronic corrector, as indicated in claim N. 1, having special features according to which, in case of a parabolic primary curvature reflector, in order to project a laser beam (preset for curvature analysis) an optical system is used, to be positioned on the curvature center, which has the shortest radius of the parabola, so as the laser rays, upon reflection on the mirror, become all directed and focalized on a single preset focus slightly away from the laser source, but on its opposite side.

6) Electronic corrector, as indicated in claim N. 1, having special features according to which the optical system used for projecting the laser control beam can be, at the outlet, engraved whith a sort of special 'step' reticle, having adequate thickness related to laser wavelenght, to improve, through a simple geometrical figure and related image, the detection of primary reflector curvature regularity and irregularity.

7) Electronic corrector, as indicated in claim N. 1, having special features according to which, on optical devices used, to project the laser beam to the primary mirror, might be placed for an image sample, forming a reticle engraved glass, at the out-let of light source, replacing the engraving of lenses or mirrors.

8) Electronic corrector, as indicated in claim N. 1, having special features according to which in the re-focalizing point of the laser rays reflected by the primary mirror, a simple telecamera system can be used along with a stenopeic hole having filter lens or eventually a focussing lens or other optical instruments apt for detecting the sample laser image.

9) Electronic corrector, as indicated in claim N. 1, having special features according to which modulation data detected by the telecamera as indicated in claim N. 8, concerning the geometrical sample laser image are stored into the computer to be subsequently used for setting the elements needed for correction, following electronic comparison with the data of the image programmed and memorized in the second store of the electronic equipment, according to mathematical rules of the ideal curvature, preset to this task.

10) Electronic corrector, as indicated in claim N. 1, having special features according to which, both focussing of the two telecameras can be controlled and adjusted by means of the same computer or processor, on the basis of all data detected by the control laser image and automatically fed into the microprocessor or computer, concerning with the correction of the whole curvature of the inflatable primary reflector, through preset available servomechanisms.

11) Electronic corrector, as indicated in claim N. 1, having special features according to which such device can be applied on every telescopes, provided the necessary modifications and adjustments to various optical basic instruments are made, namely an inflatable big diameter mirror, provided with the relevant electronic equipment as from claims N. 1, 2, 3, 4, 5, 6, 7, 8, 9 and 10, in order to improve the optical performance of any smaller telescopes as far as possible.

FIG.1  FIG.2  FIG.3

FIG.4

FIG.5  FIG.6  FIG.7

0252034

0252034

**FIG. 8**

**FIG. 9**   **FIG.10**   **FIG.11**

**FIG.12**   **FIG.13**